# EUROPEAN PATENT APPLICATION

(11) **EP 4 759 138 A1**
(43) Date of publication of application: **17.06.2026**
(21) Application number: 25219980.7
(22) Date of filing: 02.12.2025
(51) Int. Cl.: A01K 89/01, A01K 89/015

(54) **FISHING SPINNING REEL**

(30) Priority: 12.12.2024 JP 2024217348
(71) Applicant: Globeride, Inc., Higashikurume-shi, Tokyo 203-8511 (JP)
(72) Inventor: UENO, Hayato, Higashikurume-shi, 203-8511 (JP)
(74) Representative: Boult Wade Tennant LLP

(57) **Abstract**

An oscillation mechanism 50 of a fishing spinning reel comprises an interlocking gear 52 that is rotationally driven in accordance with a winding operation of a handle, and has an eccentric projection portion formed on a surface of the interlocking gear, and an oscillating slider 55 that is fixed to a base end side of a spool shaft 5A and in which a guide groove engaging with the eccentric projection portion is formed. the oscillating slider 55 comprises a sliding member 58b that is contactable with an inner surface of the reel body, on a curved portion formed to be curved, and the sliding member 58b and the screw member 25, which fixes a cover, at least partially overlap each other in a lateral view.

## Description

### BACKGROUND OF THE INVENTION

### 1. TECHNICAL FIELD

The present invention relates to a fishing spinning reel.

### 2. DESCRIPTION OF THE RELATED ART

For example, as disclosed in JP 2020-162537 A, a fishing spinning reel has a structure including a rotor that rotates in conjunction with a winding rotation operation of a handle and a spool that moves forward and backward. A pinion gear through which a support shaft (spool shaft) of the spool is inserted is meshed with a drive gear mounted on the handle, and the rotor attached to a distal end side of the pinion gear is rotationally driven via the drive gear and the pinion gear when the handle is operated for winding rotation.

When the handle is operated for winding rotation, an oscillation mechanism configured to reciprocate the spool shaft in an axial direction is provided at a rear end of the spool shaft. The oscillation mechanism disclosed in JP 2020-162537 A includes an interlocking gear that rotates together with the drive gear, and an oscillating slider that is fixed to a base end side of the spool shaft and has a guide groove formed therein, and an eccentric projection portion formed on a surface of the interlocking gear engages with the guide groove of the oscillating slider. Therefore, when the handle is operated for winding rotation, the spool shaft is reciprocatingly driven through an engagement relationship between the eccentric projection portion formed on the surface of the interlocking gear and the guide groove of the oscillating slider, and the spool is reciprocatingly driven together with rotation of the rotor.

In addition, a cover (rear cap) that closes a rear opening of a reel body is attached to the rear end portion of the reel body, and the cover is detachably mounted on the reel body by a screw member. In this case, the screw member is inserted from the spool side such that the screw member for fixing the cover is not exposed to the outside, and the cover is attracted to an edge of the rear opening of the reel body. A through-hole is formed in the oscillating slider in a front-rear direction such that the screw member does not interfere with forward and rearward movement of the oscillating slider, and the screw member is inserted through the through-hole.

### RELEVANT REFERENCES

### LIST OF RELEVANT PATENT LITERATURE

Patent Literature 1: Japanese Patent Application Publication No. 2020-162537

### SUMMARY OF THE INVENTION

Since the above-described oscillation mechanism requires formation of the through-hole in the oscillating slider, it is necessary to maintain strength, and, in order to secure machining accuracy, the oscillating slider becomes large, leaving room for improvement in reducing an overall size of the reel.

An object of the present invention is to provide a fishing spinning reel comprising an oscillation mechanism that enables size reduction of a reel body.

A fishing spinning reel according to an aspect of the present invention comprise a spool that is reciprocatingly driven by an oscillation mechanism when a handle is operated for winding and the oscillation mechanism being provided on a reel body; and a screw member that fixes a cover configured to close a rear opening of the reel body, to an edge of the rear opening of the reel body, and extends inside the reel body along a spool shaft to which the spool is attached, in which the oscillation mechanism comprises an interlocking gear that is rotationally driven in accordance with a winding operation of the handle, and has an eccentric projection portion formed on a surface of the interlocking gear, and an oscillating slider that is fixed to a base end side of the spool shaft and in which a guide groove engaging with the eccentric projection portion is formed, the oscillating slider comprises a sliding member that is contactable with an inner surface of the reel body, on a curved portion formed to be curved, and the sliding member and the screw member at least partially overlap each other in a lateral view.

The fishing spinning reel having the configuration described above comprises a screw member that fixes a cover configured to close a rear opening of the reel body, to an edge of the rear opening of the reel body. The oscillating slider constituting the oscillation mechanism comprises a curved portion formed to be curved, and a sliding member is provided on the curved portion. The sliding member and the screw member at least partially overlap in a lateral view, a curved portion is formed, and the screw member can be placed in a space created by the curvature, thereby enabling size reduction of the reel body.

According to the present invention, a fishing spinning reel allowing size reduction of a reel body can be obtained.

### BRIEF DESCRIPTION OF THE DRAWINGS

FIG. 1 is a side view illustrating an embodiment of a fishing spinning reel;
FIG. 2 is a side view illustrating the fishing spinning reel illustrated in FIG. 1 as viewed from an opposite side;
FIG. 3A is a side view illustrating an internal configuration of a reel body in which an oscillation mechanism is installed, and FIG. 3B is a perspective view thereof;
FIG. 4A is a rear view illustrating the internal configuration of the reel body in which the oscillation mechanism is installed as viewed from a rear side, and FIG. 4B is a perspective view thereof;
FIG. 5 is a perspective view illustrating an internal space inside the reel body as viewed from a side; and
FIG. 6 is a perspective view illustrating the internal space inside the reel body as viewed from a rear side.

### DETAILED DESCRIPTION

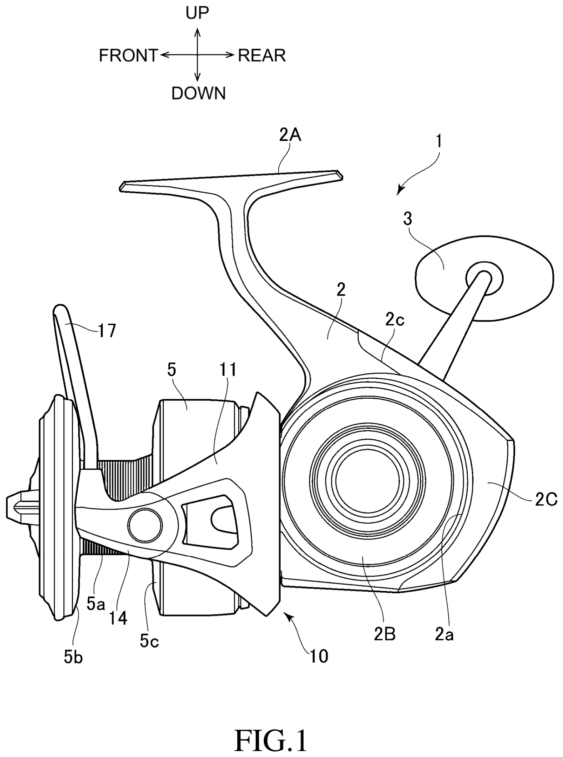

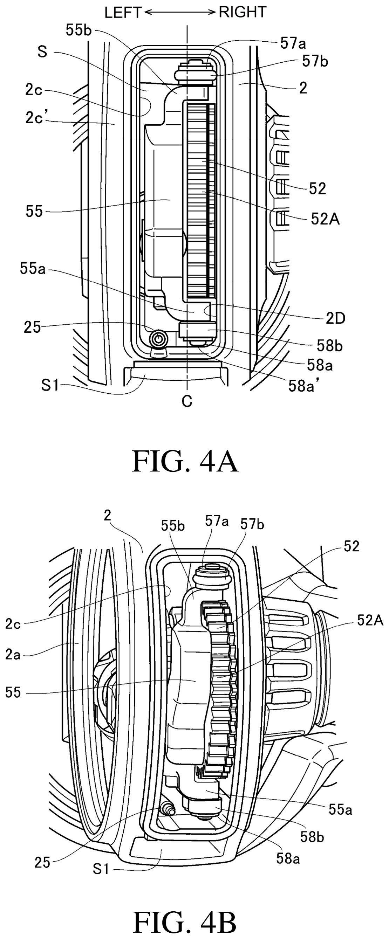

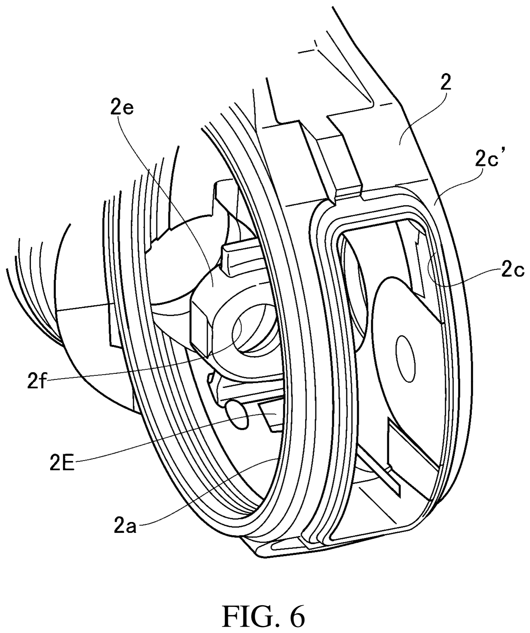

Hereinafter, an embodiment of a fishing spinning reel according to the present invention will be specifically described with reference to FIGS. 1 to 6. In a case where directions of the fishing spinning reel are indicated, in the state of FIG. 1, the front (front, front side) refers to a spool side, the rear (rear, rear side) refers to a reel body side, and an axial direction refers to a front-rear direction along the spool shaft. An upward direction refers to a reel foot side, and a downward direction refers to a side opposite to the reel foot. Furthermore, a left-right direction refers to a width direction of the reel body as viewed from a rear side as illustrated in FIG. 4A.

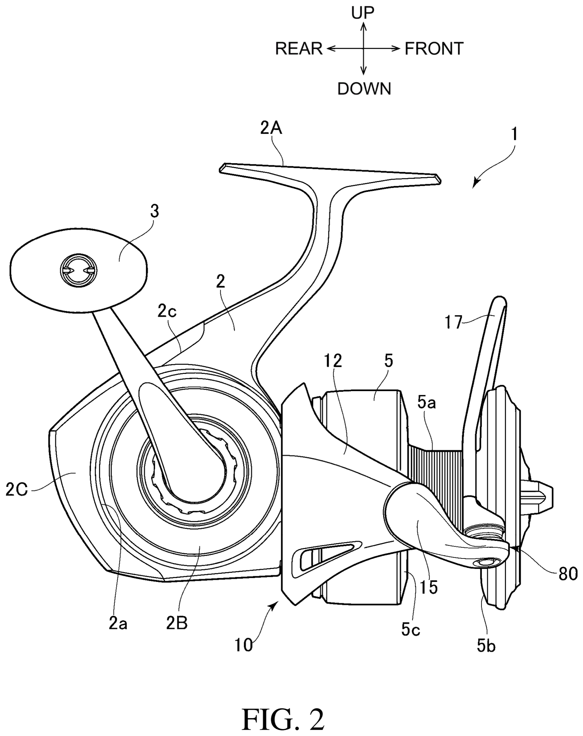

A foot portion 2A to be mounted on a fishing rod is formed on a reel body 2 of a fishing spinning reel 1. Inside the reel body 2, a handle shaft for operating a handle 3 for winding is rotatably supported via a bearing. In addition, a known driving force transmission mechanism is coupled to the handle shaft, and, in accordance with rotation operation of the handle 3, a rotor 10 is rotationally driven and a spool 5 is reciprocatingly driven forward and rearward via an oscillation mechanism 50 described later. Although the handle 3 is attached to a right side (right-hand handle) of the reel body 2 in FIGS. 1 and 2, the handle 3 can also be attached to a left side (left-hand handle) of the reel body 2 by a known replacement mechanism.

The spool 5 is formed of, for example, metal having a small specific gravity such as aluminum, an aluminum alloy, or a magnesium alloy, or of a synthetic resin material, and comprises a fishing line winding drum portion 5a around which a fishing line is wound, and a front flange portion 5b and a rear flange portion (skirt portion) 5c that regulate a line winding amount of the fishing line winding drum portion 5a in the front-rear direction.

A pair of support arms 11 and 12 are formed on the rotor 10 so as to extend forward in the axial direction at an interval of approximately 180° so as to face each other, and the spool 5 is positioned between the pair of support arms and is reciprocatingly driven forward and rearward via the oscillation mechanism. Bail support members 14 and 15 are supported at distal end portions of the pair of support arms 11 and 12 so as to be rotatable between a fishing line winding position and a fishing line releasing position. In addition, a base end portion of a bail 17 having a semi-annular shape is attached to each of the bail support members 14 and 15, and the bail 17 is rotatable together with the bail support members 14 and 15. A known fishing line guide device 80 for guiding a fishing line to the spool 5 is provided at the distal end of one of the bail support members (bail support member 15).

A circular side opening portion 2a that opens to a left side is formed in the reel body 2. A circular lid member 2B is screwed into and fixed to the side opening portion 2a. A rear opening portion 2c is formed in a rear portion of the reel body 2, and a cover (rear cap) 2C is detachably fixed to an edge 2c' of the rear opening portion 2c through a sealing member (not illustrated) to close the rear opening portion 2c.

In the reel body 2, an accommodation space S is formed inside the side opening portion 2a. A known driving force transmission mechanism and the oscillation mechanism 50 described later are accommodated in the accommodation space S.

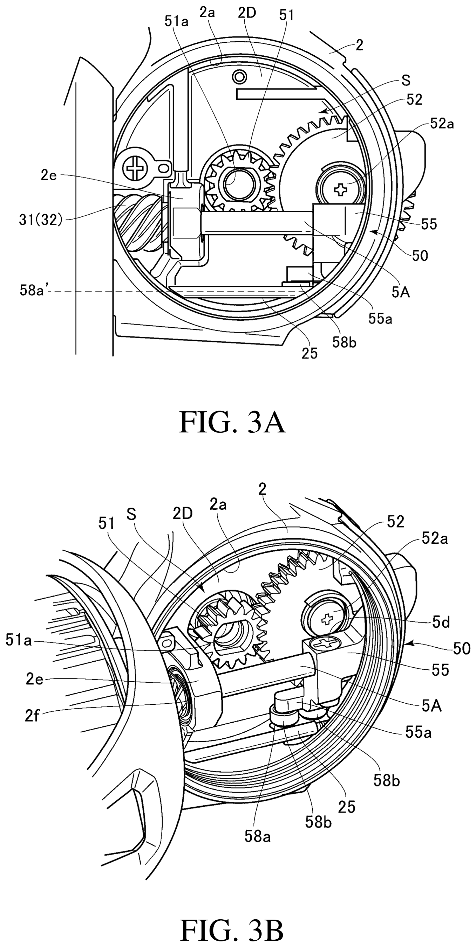

The cover 2C is fixed to the reel body 2 by a screw member 25 that extends inside the reel body 2 along a spool shaft 5A to which the spool 5 is attached (the cover is omitted in FIGS. 3 and 4). The screw member 25 is disposed in the accommodation space S so as to extend along the front-rear direction on a lower side of the reel body 2, and the cover 2C is pulled toward and fixed to the reel body 2 by inserting a jig from the spool side and rotationally operating the screw member 25.

The spool shaft 5A is inserted into a drive shaft tube 31 that is a component of the driving force transmission mechanism, and a pinion gear 32 is formed on an outer periphery of an intermediate region of the drive shaft tube 31. The pinion gear 32 is meshed with the drive gear provided on the handle shaft, and the drive shaft tube 31 is rotationally driven when the handle 3 is rotationally operated. A distal end portion of the drive shaft tube 31 is fixed with the rotor 10 by a nut member or the like, and thereby the rotor 10 is rotationally driven when the handle 3 is operated for winding.

The spool shaft 5A is inserted into the drive shaft tube 31, and is reciprocatingly driven in the front-rear direction inside the drive shaft tube 31 by the oscillation mechanism 50 together with rotational driving of the rotor 10. The spool shaft 5A is inserted into a through-hole 2f of a holding portion 2e formed inside the reel body 2, and is supported so as to stably move forward and rearward without play.

The oscillation mechanism 50 comprises a gear 51 fixed to the handle shaft, an interlocking gear 52 that is rotatably supported inside the reel body and meshed with the gear 51, and an oscillating slider 55 that engages with the interlocking gear 52. The gear 51 is provided adjacent to the drive gear, and the handle shaft is fixed in a non-rotatable manner in a central opening 51a thereof.

An eccentric projection portion (not illustrated) is provided on the surface of the interlocking gear 52 at a position radially separated from a support shaft 52a at a center thereof. The oscillating slider 55 is disposed to face the interlocking gear 52, and is fixed to a base end side of the spool shaft 5A by a screw 5d or the like.

As is known, a guide groove (not illustrated), with which the eccentric projection portion engages, is formed in the oscillating slider 55. The guide groove has a shape that causes the oscillating slider 55 to be reciprocatingly driven forward and rearward when the eccentric projection portion rotates together with the interlocking gear 52. That is, a stroke amount of the oscillating slider 55 is determined by the groove shape, a formation position of the eccentric projection portion, and a diameter of the interlocking gear 52.

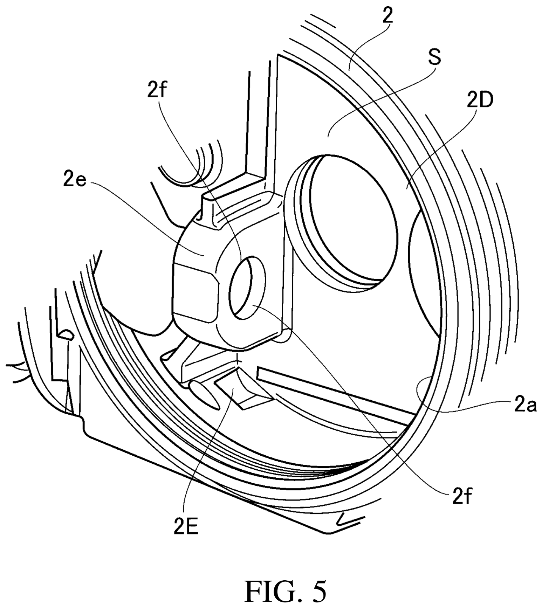

In the present embodiment, as illustrated in FIG. 5, a recess 2E, into which a portion of the oscillating slider 55 is received in a case where the oscillating slider 55 is reciprocatingly driven and moves to a front side, is formed on an inner surface on the spool side of the reel body 2. As a result, a stroke length of the oscillating slider 55 can be increased without increasing the size of the reel body. In addition, when the oscillating slider 55 is reciprocatingly driven and moves to a rear side, a portion of the oscillating slider 55 projects from the rear opening portion 2c (projects into the cover 2C), and thereby the stroke length of the oscillating slider 55 is increased without increasing the size of the reel body.

The oscillating slider 55 comprises a sliding member that comes into contact with the inner surface of the reel body 2. Here, the sliding member only needs to have a function of, in a case where the oscillating slider 55 moves forward and rearward, abutting against an inner surface 2D of the reel body 2 even when play occurs, so as to allow the oscillating slider 55 to slide in a stable manner. The sliding member may be in constant contact with the inner surface of the reel body 2, or may have a slight clearance and come into contact with the inner surface when play occurs in the oscillating slider 55, thereby guiding the oscillating slider 55 in a stable manner. In this case, by forming a contact region of the inner surface 2D of the reel body, with which the sliding member comes into contact, as a flat surface, the sliding member can be allowed to slide in a stable manner.

In the present embodiment, the sliding members are provided above and below the oscillating slider 55, and are constituted by a rotational member, preferably a ball bearing, which is rotatably supported by protrusions 57a and 58a projecting in the up-down direction. That is, by disposing the ball bearing (sliding members 57b and 58b) that come into contact with the inner surface 2D at vertically spaced positions of the oscillating slider 55, the oscillating slider 55 can be reciprocatingly driven in the front-rear direction in a stable manner without play. Therefore, it is preferable that at least the portions of the inner surface 2D of the reel body with which the sliding members come into contact are formed as flat surfaces.

In addition, it is sufficient that one or more sliding members 57b and 58b are disposed at each of the upper and lower positions, and in the present embodiment, two sliding members are disposed at the lower side of the oscillating slider 55 and one sliding member is disposed at the upper side of the oscillating slider 55.

As described above, the oscillating slider 55 faces the surface of the interlocking gear 52, and is provided, at least on the lower side, with a curved portion 55a that is formed to be curved toward the interlocking gear side. By forming such a curved portion 55a, the screw member 25 can be efficiently arranged in a space created by the curvature, as illustrated in FIG. 4A, and thus size reduction of the reel body can be obtained.

In addition, as illustrated in FIGS. 3A and 4A, the sliding member 58b and the screw member 25 are arranged to at least partially overlap each other in a lateral view (in which a lowermost end 58a' of the protrusion 58a supporting the sliding member 58b overlaps the screw member 25), and thus the sliding member 58b can be disposed below the screw member 25, thereby enabling size reduction of the reel body.

In particular, by causing the curved portion 55a to face a gear portion 52A of the interlocking gear 52 so as to overlap the gear portion 52A in the up-down direction, as illustrated in FIG. 4, the oscillating slider 55 can be arranged efficiently within the accommodation space S, enabling size reduction of the thickness in the left-right direction as well.

In the present embodiment, the oscillating slider 55 is also provided, on its upper side, with a curved portion 55b that is formed to be curved toward the interlocking gear side. As illustrated in FIG. 4, the curved portion 55b is arranged to face the gear portion 52A of the interlocking gear 52 in an overlapping manner. As a result, the oscillating slider 55 can be brought closer to the interlocking gear 52, and since the sliding members 57b and 58b come into contact with the inner surface 2D at the upper and lower positions, the oscillating slider 55 is reciprocatingly driven in the front-rear direction in a stable manner, thereby enabling size reduction of the reel body.

When the reel body 2 is viewed from a cover side (rear side) as illustrated in FIG. 4A, the screw member 25 of the present embodiment is arranged to be shifted laterally with respect to a center C of the reel body 2. That is, since no through-hole for allowing the insertion of the screw member 25 is formed in the oscillating slider 55, the oscillating slider 55 does not need to be increased in size, and precise dimensional management is not required. Therefore, size reduction of the oscillation mechanism can be obtained, the assembly can be easily performed, and the cost can be reduced.

In addition, in the reel body 2 of the present embodiment, a cavity portion S1 partitioned by a partition wall is formed below the screw member 25. As described above, since the screw member 25 is arranged to overlap the oscillating slider 55 in a lateral view, a space is created below the oscillating slider 55, and this space can be partitioned by the partition wall to form the cavity portion S1.

By forming such a cavity portion S1, an impact can be absorbed even when the reel is dropped, making it difficult for deformation or positional displacement of the oscillation mechanism to occur.

The embodiment of the present invention has been described above, but the present invention is not limited to the above-described embodiment and may be modified in various ways. For example, the shape of the reel body 2, the shape of the internal accommodation space S, the shape of the oscillating slider 55, the shape of the guide groove (not illustrated), and the like may be appropriately modified, and the configuration, the number of installed components, the installation positions, and the contact modes of the sliding members 57b and 58b with respect to the reel body 2 may also be modified. In addition, as long as at least a part of the screw member 25 overlaps the oscillating slider 55 in a lateral view without being inserted through the oscillating slider 55, the configuration such as the thickness and length of the screw member 25 may be appropriately modified.

### Reference Signs List

- 1: fishing spinning reel
- 2: reel body
- 2C: cover
- 2D: inner surface
- 3: handle
- 5: spool
- 10: rotor
- 25: screw member
- 50: oscillation mechanism
- 55: oscillating slider
- 55a, 55b: curved portion
- 57b, 58b: sliding member

## Claims

1. A fishing spinning reel comprising:
a spool that is reciprocatingly driven by an oscillation mechanism when a handle is operated for winding, the oscillation mechanism being provided on a reel body; and
a screw member that fixes a cover configured to close a rear opening of the reel body, to an edge of the rear opening of the reel body, and extends inside the reel body along a spool shaft to which the spool is attached,
wherein the oscillation mechanism comprises an interlocking gear that is rotationally driven in accordance with a winding operation of the handle, and has an eccentric projection portion formed on a surface of the interlocking gear, and an oscillating slider that is fixed to a base end side of the spool shaft and in which a guide groove engaging with the eccentric projection portion is formed,
the oscillating slider comprises a sliding member that is contactable with an inner surface of the reel body, on a curved portion formed to be curved, and
the sliding member and the screw member at least partially overlap each other in a lateral view.

2. The fishing spinning reel according to claim 1,
wherein the curved portion faces a gear portion of the interlocking gear.

3. The fishing spinning reel according to claim 1,
wherein a recess, into which a portion of the oscillating slider is received in a case where the oscillating slider is reciprocatingly driven, is formed on the inner surface on the spool side of the reel body.

4. The fishing spinning reel according to claim 1,
wherein a flat portion on which the sliding member slides in a state of being abutted is formed in the reel body.

5. The fishing spinning reel according to claim 1,
wherein in the reel body, a cavity portion partitioned by a partition wall is formed below the screw member.

6. The fishing spinning reel according to claim 1,
wherein the screw member is arranged to be shifted laterally with respect to a center of the reel body when the reel body is viewed from the cover side.
